# EUROPEAN PATENT APPLICATION

(11) **EP 1 545 101 A2**
(43) Date of publication of application: **22.06.2005**
(21) Application number: 04029623.8
(22) Date of filing: 15.12.2004
(51) Int. Cl.: H04M 1/253, H04M 3/493, H04M 7/00, H04M 1/247

(54) **Display accessory for telephone without display**

(30) Priority: 19.12.2003 US 741368
(71) Applicant: ALCATEL, 75008 Paris (FR)
(72) Inventor: Badt Jr., Sig Harold, TX 75081, Richardson (US); Rao, Kashipati G., TX 75025 Plano (US); Skoog, Frederick H., 76034 Colleyville, Texas (US); Suhail, Atiya, TX 75025 Plano (US); Kopp, Dieter, 75428 Illingen (DE); Desai, Snehal, TX 75081 Richardson (US)
(74) Representative: Schäfer, Wolfgang, Dipl.-Ing.

(57) **Abstract**

An ACD accessory (10) and a GUI accessory (100), which may be integrated into a phone or provided as a separate device, are coupled between the PSTN and the user's legacy phone (12) to provide enhanced services. The ACD accessory (10) provides visual display and selection capabilities for menus provided by the ACD system (14). The GUI accessory (100) provides enhanced control of telephony features and enhanced data services through a graphical proxy server (134).

## Description

### Background of the Invention

### 1. TECHNICAL FIELD

This invention relates in general to telecommunications and, more particularly, to display accessory for use with a non-graphical phone.

### 2. DESCRIPTION OF THE RELATED ART

Over the last two decades, communications capabilities have increased dramatically. Current communication networks are now capable of providing sophisticated features such as multiple party conferencing with multiple private sidebar conversations, programmable "follow-me" calling, and sophisticated voice mail options. ACD (automatic call distribution) systems, which allow a calling party to direct his or her call based on voice prompts, have reduced the costs of maintaining an in-house switchboard. In addition to voice communications, telephone lines are also used for data communications using modems.

Unfortunately, the main interface to a communication network, the 12-button telephone keypad, has not changed in many years. As a result, some features are seldom used and other features are clumsy to use. In some cases, features can be provisioned by a user through a computer interface apart from the telephone. For example, follow-me calling allows a user to have a single telephone number which is used to access a number of communication devices associated with the user, such as a home telephone number, a work telephone number, a mobile telephone and voice mail, in a specified sequence. The user can define the sequence in which the communication devices are accessed in relation to certain criteria, such as date and time. For example, a user may define a work day sequence where his or her work number is accessed first, a secretarial phone accessed second, a mobile phone accessed third and voice mail accessed fourth; the weekend sequence may be home phone first, mobile phone second and voice mail third. The desired sequence is stored in a database of a network provider. To ease the burden of user programming, some providers have allowed the database to be modified by users through a Web page over an Internet connection. However, use of a separate computer connection is often inconvenient, and Internet provisioning of services can reasonably be used only for certain types of features that do not change often.

Some voice-over-IP (VOIP) phones, such as SIP phones are becoming available with graphical interfaces that simplify use of modern communications features, but mainsteam use of these phones is in the future. For now, the vast majority of communications is performed using the common 12-button telephone, with little or no text or graphics capability.

Accordingly, a need has arisen for a method an apparatus for improving communications using a common 12-button telephone.

### Brief Summary of the Invention

In a first aspect of the present invention, a device used in connection with a public switched telephone network (PSTN) telephone includes a display and processing circuitry for creating a data connection over the PSTN with an automatic call distribution (ACD) system. Data is sent and received to and from the ACD system and information is displayed on the display responsive to received data from the ACD.

This aspect of the present invention allows a user to visually navigate ACD menus.

In a second aspect of the present invention, a device used in connection with a public switched telephone network (PSTN) telephone includes a display and processing circuitry. The processing circuitry executes a graphical user interface, creates a data connection over the PSTN with a data server for controlling operation of the graphical user interface; and sends and receives data to and from the data server for controlling operation of PSTN telephone features.

This aspect of the invention allows a user to easily configure PSTN telephone features using a graphical interface over a PSTN connection. The device can also be used to provide information to the user over the data connection and to create analog and digital voice connections.

### Brief Description of the Several Views of the Drawings

For a more complete understanding of the present invention, and the advantages thereof, reference is now made to the following descriptions taken in conjunction with the accompanying drawings, in which:

Figure 1 illustrates a block diagram of a telephone accessory used in connection with a common PSTN telephone to provide enhanced capabilities in connection with an ACD system;

Figure 2 illustrates a flow chart for using the ACD accessory of Figure 1;

Figure 3 illustrates an example sequence of screens on the ACD accessory for a simple bank transaction;

Figure 4 shows a variation of the sequence of Figure 3 used with an ACD accessory with a touch screen;

Figure 5 illustrates a block diagram of a circuit to implement the ACD accessory;

Figure 6 illustrates a block diagram of a VOIP network;

Figure 7 illustrates a block diagram of a graphical proxy server coupled to a black phone through a GUI accessory;

Figure 8 illustrates a block diagram of terminal controller used in the graphical proxy and it interaction with other components of the graphical proxy;

Figure 9 illustrates a block diagram of a graphical client of a graphical terminal associated with a graphical proxy server.

Figure 10 illustrates the steps for registration/log-in;

Figure 11 illustrates a block diagram of the GUI accessory;

Figure 12 illustrates a connection between the GUI accessory and the graphical proxy;

Figures 13a through 13f illustrate examples of telephony features and information services made available with the GUI accessory.

### Detailed Description of the Invention

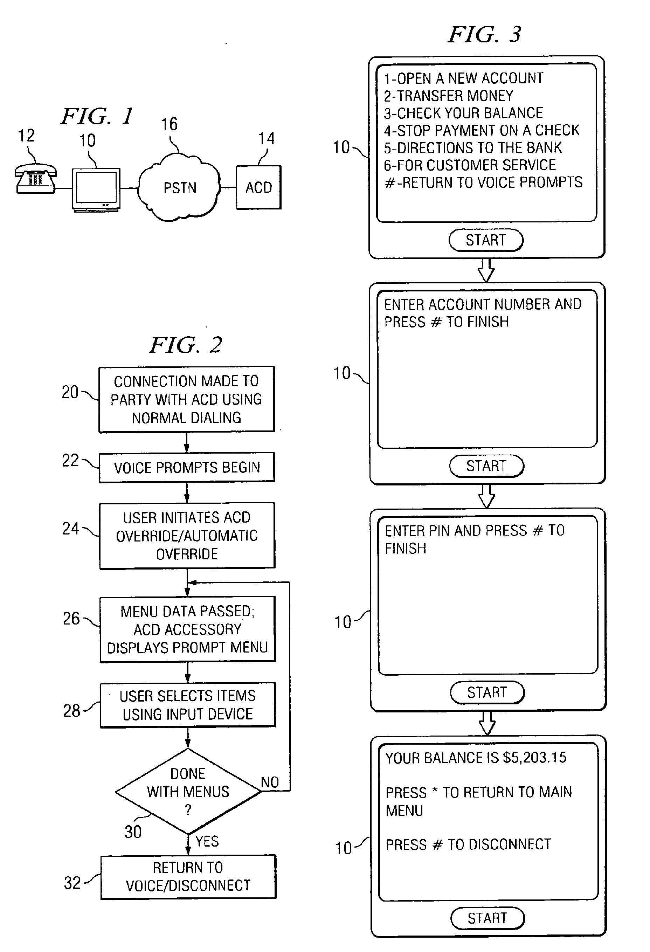

The present invention is best understood in relation to Figures 1 through 13f of the drawings, like numerals being used for like elements of the various drawings.

Figure 1 illustrates a block diagram of a telephone accessory 10 that can be used in connection with a common 12-button telephone (hereinafter a "black phone") 12 to provide enhanced capabilities in connection with an ACD system 14 through the public switched telephone network (PSTN) 16. While the ACD accessory 10 is shown as a separate device from the black phone 12, it is understood that the accessory 10 and phone 12 could be combined into a single physical device.

The black phone 12 is connected to the ACD accessory 10. The ACD accessory 10 is coupled to the PSTN 16 through a normal wall connection (or wireless connection to the wall jack).

In operation, the ACD accessory 10 is used to improve interaction with an ACD system 14. ACD systems 14 are often used by business, and some households, primarily to direct a caller to the desired party through one or more sets of voice prompts. For example, a bank may have a first set of voice prompts, such as these:
Please press
   One to open a new account,
   Two to transfer money between accounts,
   Three to check your balance,
   Four to stop payment on a check,
   Five for directions to the bank, and
   Six for customer service.

Once a number is pressed on the calling party's 12-button keypad, the DTMF tone corresponding to the pressed key is received by the ACD system, and the next action is taken based on the received tone. The input from the calling party could result in, for example, another set of voice prompts for more information, a request for information to be entered via the 12-button keypad, a connection to a telephone extension, or a connection to a pre-recorded voice message.

While ACD systems can greatly reduce the cost of human operators, they can also tend to be frustrating to the calling party for several reasons. First, the voice prompts can be time-consuming and frustrating. Second, if the caller listens to the whole list, it is easy to forget which option was the desired option.

The ACD accessory 10 improves the quality of interaction with an ACD system 14 by providing a visual display which can be used to interact with the ACD system 14. In its simplest form, the ACD accessory 10 visually displays a selection menu corresponding to the voice prompts generated by the ACD system 14 and the user selects from the various options by pressing a key on the 12-button keypad of the black phone 12.

Figure 2 illustrates a flow chart for using the ACD accessory 10. In step 20, the caller places a call to a called party that has an ACD and a connection is made. At this point, the ACD system will start its normal voice prompts in step 22. Once the calling party hears the voice prompts, a start button is pressed ( or a predetermined sequence of keys is entered on the keypad of black phone 12) in step 24 to initiate the override feature, where voice prompts are replaced by text messaging between the ACD system 14 and the ACD accessory 10. Alternatively, in step 24, the ACD system 14 (or the ACD accessory 10) could send a short data string (the auto-detection string) which would be detected by the ACD accessory 10 (or the ACD system 14, if the ACD accessory 10 initiated the auto-detection string) at the beginning of the connection. After the caller has initiated voice prompt override (or the auto-detection string has initiated voice prompt override), the ACD system 14 sends the text corresponding to the voice prompts to the ACD accessory 10 over data modems found in both the ACD system 14 and the ACD accessory 10. The data passed from the ACD system 14 to the ACD accessory 10 is used to display a menu, such as the menu shown in Figure 3.

In step 28, the user selects an option from the menu using an input device. One input device could be the 12-button keypad on the phone. A second input device could be a keypad on the ACD accessory 10. The keypad on the ACD accessory could be as simple as up and down cursor keys, or as complex as an alphanumeric keypad. A third input device could be a touch screen for simply touching the desired selection. A fourth input device could be voice recognition technology employed at either the ACD accessory 10 or the ACD system 14.

After an input is entered in step 28, the ACD system 14 can send a signal indicating that it is finished, or send another set of options (or information). If the ACD system sends a signal to return to voice, the black phone 12 is returned to the voice connection.

Figure 3 illustrates an example sequence of screens on the ACD accessory 10 for a simple bank transaction. The first screen shows the text of the options provided above. After the calling party presses a "3" (for checking the balance") the ACD system 14 sends data to generate a new screen requesting an account number. After the account number is entered by the calling party, the ACD system sends data to generate a new screen requesting a PIN number to verify ownership of the account. After the PIN is entered, the balance is shown, along with directions to return to the main menu.

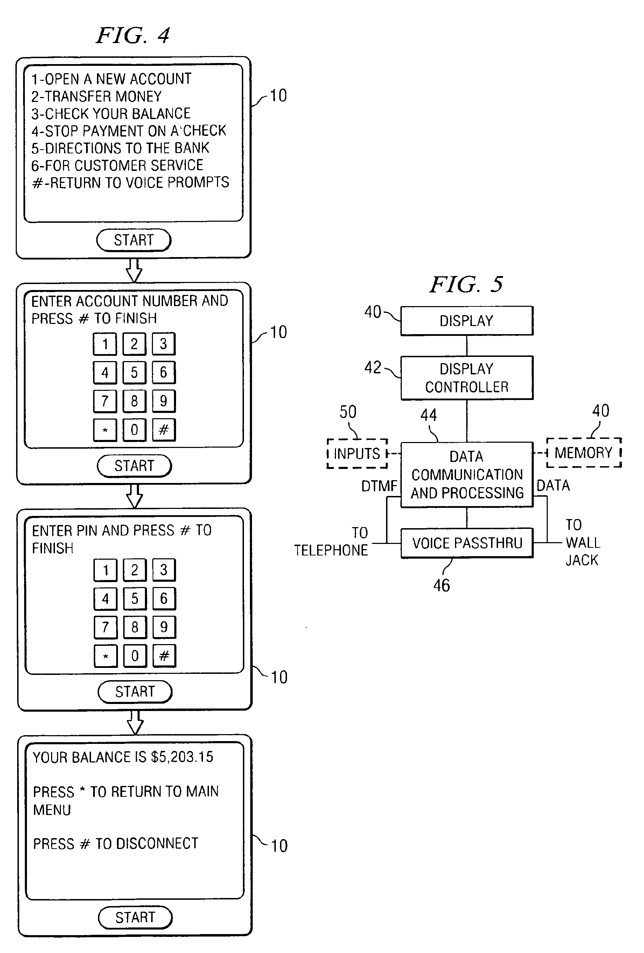

When an initial connection is made between the ACD accessory 10 and the ACD system 14, data could be passed indicating capabilities of the ACD accessory 10. For example, the graphics capability and input capabilities could be passed to the ACD system, which would vary its menus accordingly. For example, Figure 4 shows a variation of the sequence of Figure 3 that could be used if the ACD accessory 10 had a touch screen with minimal graphics capability. In this case, it is assumed that the ACD accessory 10 has internal memory for storing standardized graphics for common functions, such as buttons for numbers and letters. Accordingly, the ACD system would not need to send graphics information, which would be slow using modem transfers over a voice connection; the ACD could simply send a string "G1" to indicate that the graphics for a "1" should be displayed.

Figure 5 illustrates a block diagram of a circuit to implement the ACD accessory 10. A display 40, such as an LCD (liquid crystal display) or an OLED (organic light emitting diode) is coupled to display controller 42. Display controller 42 is coupled to data communications and processing circuitry 44, which may be, for example, a DSP (digital signal processor) or a general purpose processor and a modem chip. The data communications and processing circuitry 44 is coupled to pass-through circuitry 46, memory 48 and, optionally, to input circuitry 50.

In operation, the data communication and processing circuitry manages data communication between the ACD accessory 10 and the ACD system 14, and controls the display 40 through the display controller 42. When the data communication and processing circuitry is performing a data communication, the voice pass-through circuitry 46 is disabled, so that the data communication will not be corrupted by sounds entering the phone's microphone. Programs for the data communication and processing circuitry 44 are stored in memory 40, along with internal graphics, as described above. In an actual implementation, the memory may be internal to the processing circuit used in the data communication and processing circuitry 44. Depending upon the configuration, input circuitry 50 may be used to provide user inputs to the data communication processing circuitry 44 or, alternatively, the data communication and processing circuitry 44 may receive all inputs through the keypad of the black phone 12 as DTMF (dual tone multi-frequency) signals.

In order to keep the communications between the ACD accessory 10 and the ACD system 14 as responsive as possible, the preferred embodiment uses a relatively low-speed data connection and a standard protocol that is known to each device, such that the modem circuitry on either side of the data connection uses a minimum of initialization and handshaking to establish the data connection. For example, a 9,600 bps (bits per second) connection can be reliably used with almost all voice lines, including long distance lines, yet is fast enough to quickly communicate text data to the ACD accessory device. By setting a standard speed, the modems on either side of the connection will not need to test communication quality at different speeds, which is time-consuming and noisy.

While the ACD accessory 10 is described in connection with a black phone 12, it could also be used in connection with a SIP phone or similar phone that works over a digital communication link. A SIP phone can communicate with an ACD system 14 directly over a purely digital channel, or it can communicate with an ACD system by way of a PSTN gateway. When used over a PSTN gateway, the ACD accessory will allow visual navigation of the ACD prompts.

In order to work with the ACD accessory 10, the ACD system 12 must also be able to provide data communication over voice lines and must be able to transmit the display information to the ACD accessory 10. Thus, existing ACD systems 12 would need slight modifications to support the ACD accessory 10.

The ACD accessory described above provides significant advantages over the prior art. First, the ACD accessory can be used with any legacy black phone, or with newer phones such as SIP phones, to provide ACD prompts in a visual manner, which is easier and faster than audible prompts. Second, the ACD accessory can enhance ACD prompts by the use of graphics.

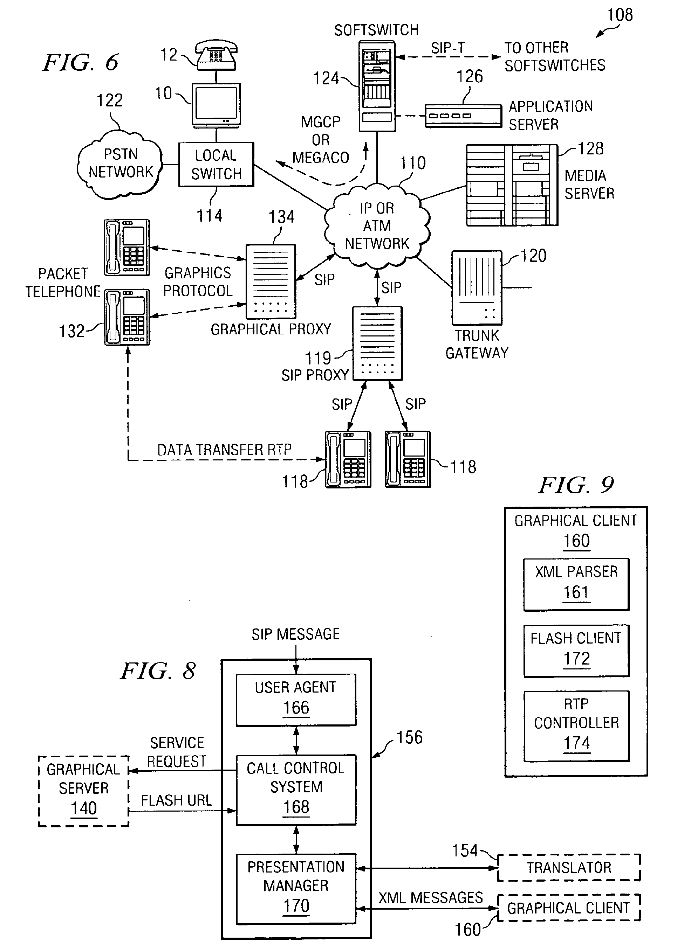

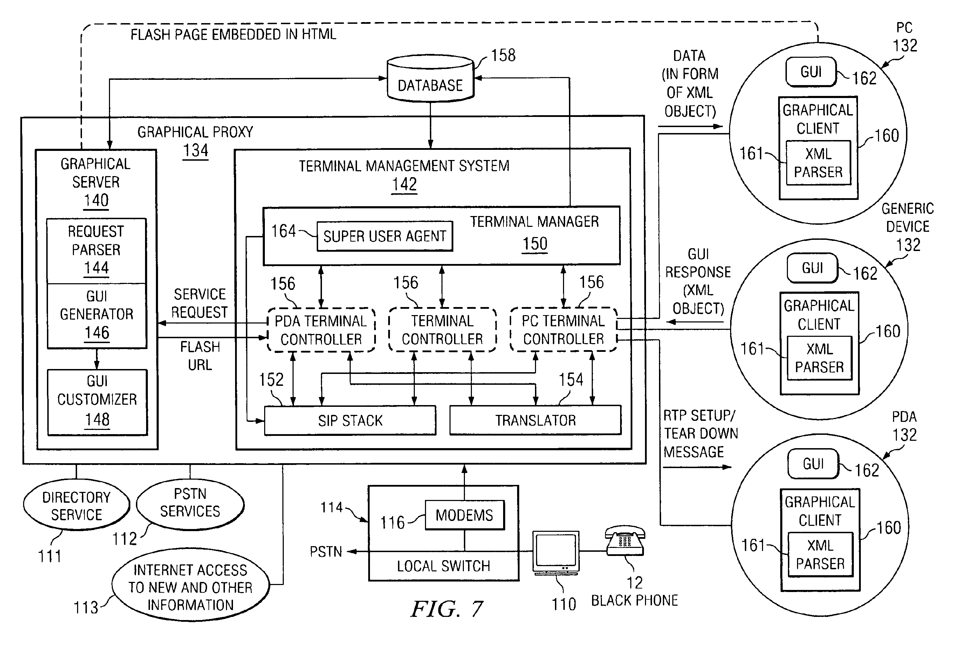

A second embodiment of the invention is described in connection with Figures 6 through 13f. In this embodiment, a graphical user interface (GUI) accessory 100 is used to facilitate the use of enhanced telephony features and to provide enhanced information in connection with a black phone or other phone having limited graphics ability.

Figure 6 illustrates a block diagram of a VOIP network 108 of the type described in U.S. Ser. No. 10/092,075, entitled "Graphical Telephone System", filed March 6, 2002 to Ransom, which is incorporated by reference herein. A packet-based network 110 is the main carrier of telecommunications traffic. The network 110 could use, for example, IP (Internet Protocol) or ATM (Asynchronous Transfer Mode). Legacy telephone equipment 12 (i.e., black phones and similar non-graphical telephone equipment compatible with the public switched telephone network) is coupled to the network 110 and the PSTN (public switch telephone network) through a GUI accessory 100 connected to a local switch (central office) 114.

SIP telephones 118 (or other VOIP phones, such as H.323 phones) and SIP proxy server 119 can be connected directly to the network 110. SIP telephones 118 are intelligent devices that contain processors that are independent from a central switching location (i.e., a central office) and have one or more processors to create, modify and terminate communication sessions.

A trunk gateway 120 provides an interface between the packet network 110 and the PSTN (public switched telephone network) 122.

Softswitches 124, application servers 126 and media servers 128 are instrumental in providing advanced functions. A softswitch 124 is a software-based entity that provides call control functionality. A softswitch 124 may support multiple packet-based protocols, such as SIP, MGCP, MEGACO and multiple telephony and data protocols, such as CAS, INAP, ISDN, SS7, TCAP, TCP/IP. A softswitch 124 may interface with the PSTN 122 through various gateways.

In a SIP environment, a softswitch 124 may act as a SIP proxy server for name resolution and user location - similar to a domain server. In this way, a name (similar to a domain name) can be dynamically associated with a current IP address. Also, a SIP proxy server may be used for redirection of packets, where the proxy server "pretends" to the other network elements that it is the user's SIP terminal and forwards messages to the real SIP terminal (or conceivably to another SIP Proxy).

Application servers 126 provide services that may result in termination of a call, such as voice mail, conference bridging, pre-paid calling, or delivering services and information to an end user. An application server can be coupled to other data networks, such as the Internet, to gain access to information systems.

Media servers 126 provide media processing under control of a media gateway controller (not shown). The media server 126 could provide, for example, voice storage and responses for voice mail, or video streams.

Graphical terminals (described below) 132 communicate with an associated graphical proxy 134 with other SIP phones (and similar VOIP devices) over the network 110 using a graphics protocol between the graphics terminals 132 and the graphical proxy 134, where the graphics protocol controls the GUI of the graphics terminal and provides control information to the graphical proxy 134 regarding a user's actions with the packet phone's GUI. The graphical proxy 134 communicates with other devices over the network using SIP (or similar protocol).

U.S. Ser. No. 10/092,075, referenced above, describes the use of a graphical proxy 134 to control the GUI of a "dumb" packet phone, rather than an "intelligent" SIP phone. Responsive to actions by the user, the graphical proxy sends commands to the dumb packet phone to control the operation of the user interface, as opposed to the SIP phone controlling the user interface internally. This provides a significant advantage over the prior art, since the network provider could control the GUI of the packet telephones to add value to its network services and can improve the consistency of the user interface between phones.

A large class of computing devices could function as a graphics terminal 132, even though these devices do not have the client communication stack normally associated with a packet phone. Mainly, a graphics terminal 132 includes sound and display capabilities, with network communications functionality. Devices of this type would include personal computers (including desktop and portable computers), personal digital assistants (PDAs, including pocket PCs) and so on. It is assumed that these devices include browser software with pluggable and downloadable MACROMEDIA FLASH (or other interactive graphics design software) and have a TCP/IP and RTP (Real-time Transport Protocol) stack.

In operation, the GUI accessory communicates with the graphical proxy server 134 to provide enhanced telephony features to telephone customers with legacy service. These customers include, but are not limited to, customers who cannot receive broadband data connections and therefore cannot practically use a SIP, or similar, device.

Figure 7 illustrates a black phone 12 coupled to a graphical accessory 100 coupled to a local switch 102. Local switch 102 is coupled to a network 110 through a modem bank, similar to that used to provide dial-up Internet service. The modem bank 116 is coupled to a graphical proxy 134. The graphical proxy 134 is coupled to other servers (such as the directory service 111 and PSTN service server 112) through network 110, or additional public and/or private networks.

One aspect of the graphical proxy 134 of Figure 7 is to support graphical terminals 132 that do not have a client communication stack, as described in detail in connection with U.S. Ser. No. 10/317,447, entitled, "GRAPHICAL PROXY FOR LESS CAPABLE TERMINALS" to Suhail et al filed December 12, 2002, which is incorporated by reference herein. In this application of the graphical proxy server 134, described in detail below, the graphical proxy 134 includes two major functional blocks, a graphical server 140 and a terminal management system 142. The graphical server 140 includes a request parser 144, a GUI generator 146 and a GUI customizer 148. The terminal management system 142 includes a terminal manager 150, a SIP stack 152, a translator 154, and multiple instances of terminal controllers 156, where each instance of a terminal controller 156 is associated with a respective graphical terminal 132. The graphical server 140 and the terminal management system 142 are in communication with a database 158. For purposes of illustration, three graphical terminals are shown: a personal computer 132a, a generic processing device 132b and a PDA 132c. Each graphical terminal 132 includes graphical client software 160 and GUI software 162.

The terminal management system 142 is responsible for registering the associated graphical terminals 132 with the graphical proxy 134 and then registering on behalf of each associated graphical terminal 132 with the SIP Proxy 119. The terminal management system 142 handles the calls for each associated graphical terminal 132 and interacts with the graphical server 140 to provide a customized GUI for each graphical terminal 132 to display current call status.

The terminal manager 150 manages all the associated graphical terminals 132. When a user starts the FLASH client on a graphical terminal 132, the graphical terminal establishes a connection with the terminal manager 150. The terminal manager 150 then instantiates a terminal controller 156 for that graphical terminal 132 and maintains the mapping between the graphical terminal 132 and the respective terminal controller 150. The terminal manager 150 implements a Super user agent 164, which receives requests for connection for all terminals 132, identifies which terminal is associated with the request, and then passes the request to the user agent 166 (see Figure 8) in the terminal controller 156 for the particular terminal. The Super User Agent 164 is also responsible for registering each terminal 132 with the SIP Proxy server 119. To the SIP proxy server 119, the Super user agent 164 appears as the individual user agent for a terminal.

Figure 8 shows different components of the terminal controller 156 and their interaction with other components of the graphical proxy 134. There is one terminal controller 156 instantiated for each terminal 132. Each terminal controller 156 includes a user agent 166, a call control system 168 and a presentation manager 170. The User agent 166 receives and sends SIP messages on behalf of the associated graphical terminal 132 (while the present invention is described in connection with the SIP protocol, the user agents 166 could support any available protocol, such as H.323, MGCP, MEGACO, any protocol developed in the future, or multiple protocols). The user agent 166 processes SIP requests and response messages coming to the terminal 132 and provides relevant information to the call control system 168. For example, when the user agent 166 receives an INVITE message for its terminal 132, it processes that message and informs the call control system 168 that there is a request for connection or incoming call for its associated terminal 132 from Caller X and the desired media for communication. The user agent 166 also generates appropriate SIP requests and response messages based on the information it gets from the call control system 168 responsive to user responses.

By using a Super user agent 164 to receive and send SIP messages to the SIP proxy server 119, only a single port is needed to receive and send messages associated with all terminal controllers. If each user agent was separately registered on behalf of its associated graphical terminal 132, a separate port would be required for each terminal controller.

The call control system 168 handles incoming and outgoing calls for its associated terminal 132 and manages all active calls. It gets information on the incoming messages from the user agent 166 and provides information on user responses back to the user agent. The call control system 168 also generates service requests and sends them to the graphical server 140 to get a URL (Uniform Resource Locator) for an appropriate FLASH page displaying the desired user interface screen.

For example, if there is an incoming call, the call control system 168 generates a request to "show incoming call". The graphical server 140 then returns the URL of the FLASH page with the display for an incoming call. The incoming call FLASH page may include multiple graphical elements, but will not include specific text relevant to the current call, such as the name of the caller. The call control system 168 assembles the URL and the data that has to be filled in the FLASH page such as the Callers and Callee's name in the form of XML message and passes it to the presentation manager 170. The FLASH client 160 on the associated terminal 132 has a built in XML parser 161; it loads the FLASH page from the given URL and fills the fields with the data provided in the XML message. The call control system 168 also receives GUI response messages from the terminal 132 through the presentation manager 170 and invokes the translator 154 to parse the XML messages and translate them to JAVA objects that can be used by the call control system 168. The call control system 168 also sends RTP setup and RTP tear down messages to the RTP controller 174 (See Figure 9) through FLASH on the terminal. RTP setup message is sent when the call setup is complete and the terminal has to set up RTP session with the remote party to start sending/receiving media. Similarly RTP tear down message is sent to the terminal if the user at the terminal or the remote party ends the call.

The presentation manager 170 manages the display of its associated terminal 132. The terminal 132 could support several "phone lines "; in other words a single terminal can handle more than one active call at a time. The presentation manager 170 maintains individual folders for different calls. The call control system 168 sends the graphical representation of call status for a particular call to the presentation manager 170. The presentation manager 170 decides where to display this graphical representation. In a preferred embodiment, the presentation manager 170 communicates with the graphical client 160 in FLASH through XML sockets. When the presentation manager 170 of a monitored terminal 132a receives an XML socket from the monitored terminal 132a, a copy of the XML socket is sent to the presentation manager 170 associated with the monitoring terminal 132b.

Referring again to Figure 7, the translator 154 translates the GUI response messages (indicating user actions, such as pressing a button or icon) coming from the terminal 132 in XML format to JAVA objects and translates JAVA objects to XML messages that have to be sent to the terminal 132. This two way mapping between JAVA and XML may be done using JAVA Architecture for XML Binding (JAXB). JAXB compiles an XML schema into one or more JAVA technology classes. The combination of the schema derived classes and the binding framework enables to perform the following operations on an XML document:
**unmarshal** XML content into a JAVA representation. This JAVA representation can then be used by call control system to extract the information from the XML message;
**access, update** and **validate** the JAVA representation against schema constraint;
**marshal** the JAVA representation of the XML content into XML content. This is used by the call control system to generate XML messages that are sent to the user terminal.

The graphical server 140 generates the GUI for the terminals 132. For each associated terminal 132, the graphical server queries the database 158 to get the display capabilities of the terminal, such as size of the screen, depth of color etc. These capabilities are provided to the terminal manager 150 by the terminal 132 at the time of registration and stored in the database 158. When the graphical server 140 receives a request for a GUI, it customizes the GUI to the capabilities of the particular terminal. The graphical server 140 includes a GUI generator 146 and a GUI customizer 148.

The GUI generator 146 stores a stack of static FLASH pages. The request parser 144 parses the service requests coming from the terminal controllers 156. Based on the particular service request, the GUI generator returns an appropriate FLASH page URL to the requesting terminal controller 156.

The GUI customizer 148 customizes a selected FLASH page based on the capabilities of the particular graphical terminal 132.

The graphical proxy 134 uses the database 158 (which could be part of the graphical proxy 134 or a separate device) to store user related information. The information stored in the database 158 includes: (1) user name and password of registered users, (2) current IP address of active registered users; (3) display capabilities of different terminals such as size of the screen color depth, etc., (4) media features that the user would like to use for communication with the remote party and (5) telephony features that the user has subscribed to such as Call Forwarding, Conferencing, Breakout room etc.

A graphical client application 160 runs on each terminal 132. Figure 9 illustrates a block diagram of the graphical client 160. In addition to the XML parser 161, the graphical client 160 includes: (1) A FLASH client 172 to establish a TCP/IP connection with the graphical proxy 134 and for loading the login FLASH page from the graphical server 140 and (2) an RTP controller 174 responsible for setting up and tearing down the RTP session between the terminal 132 connected to the graphical proxy 134 and the remote party terminal. The RTP session has to be set up by the terminal because media does not go through the graphical proxy. Since the call set-up and tear down is controlled by the graphical proxy 134, the graphical proxy sends messages to the RTP controller 172 on the terminal 132 regarding when to set up and break down the RTP session along with the required parameters.

The architecture described in connection with Figures 5-8 allows "dumb" terminals to act as VOIP phones, such as SIP phones or H.323 phones; the graphical proxy 134 only needs to support the underlying signaling protocol. The graphical proxy 134 can be updated to support new protocols without the need to update the terminals 132.

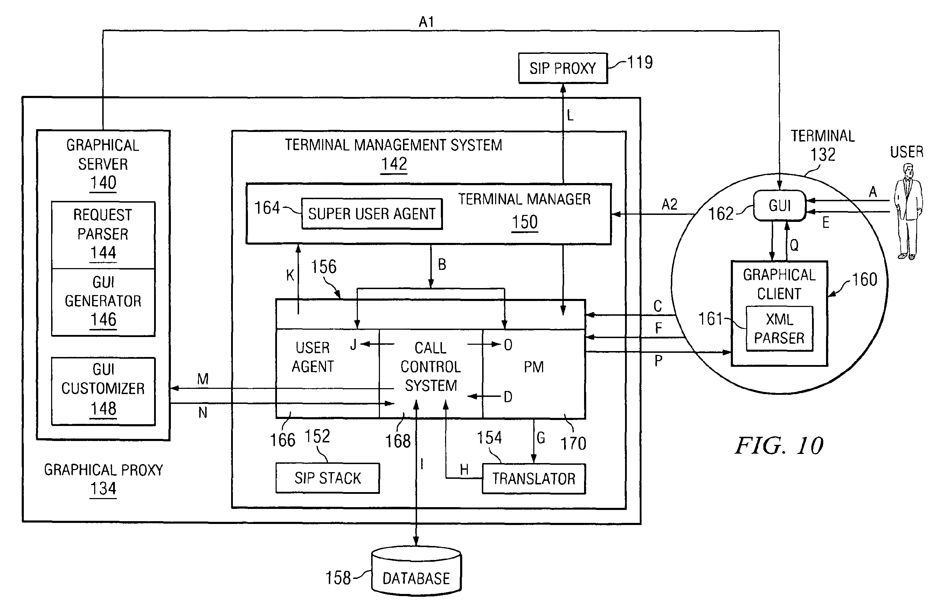

As an illustration of the operation of the network 108, Figure 10 illustrates the steps for registration/log-in. The steps include:
a. User initiates the FLASH client 172 on the terminal.
   **A1.** FLASH client 172 establishes an HTTP (Hyper Text Transfer Protocol) connection with the graphical server 140 and downloads the initial FLASH page that allows the user to Register/Login.
   **A2.** FLASH client 172 sets up a TCP/IP connection with the terminal manager 150.
b. Terminal manager 150 instantiates presentation manager (PM) 170 and user agent 166 for the terminal and passes the connection reference of the user agent 166 to the presentation manager 170.
c. The TCP/IP connection is passed from the terminal manager 150 to the presentation manager 170 and now the FLASH client 172 directly communicates with the presentation manager 170.
d. Presentation manager 170 instantiates the call control system (CCS) 168.
e. The user either registers or if he or she has already registered enters his or her username and password.
f. This registration/login information is sent to the presentation manager 170 in XML format.
g. The presentation manager 170 invokes the translator 154 to parse the registration/login information.
h. The call control system 168 gets the extracted information from the translator 154.
i. If the information is pertaining to registration information call control system 168 stores this information in the database 158 else, if the user is logging in, call control system 168 accesses the database to authenticate the user.
j. Call control system 168 passes username to the user agent 166.
k. Call control system 168 passes username and user agent 166 reference to Super user agent 164.
l. If the user is registering, Super user agent 164 creates a REGISTER message on behalf of the user and sends it to the SIP Proxy 119. This completes the registration of the user with the SIP Proxy19.
m. Call control system 168 generates a service request to the graphical server 140 for the main FLASH page that can allow the user to make and receive calls.
n. The graphical server 140 returns the URL of this FLASH page.
o. Call control system 168 passes the URL in XML format to the presentation manager 170.
p. Presentation manager 170 passes the URL to the FLASH client 172.
q. The built-in XML parser in FLASH parses the XML message and loads the page from the given URL.

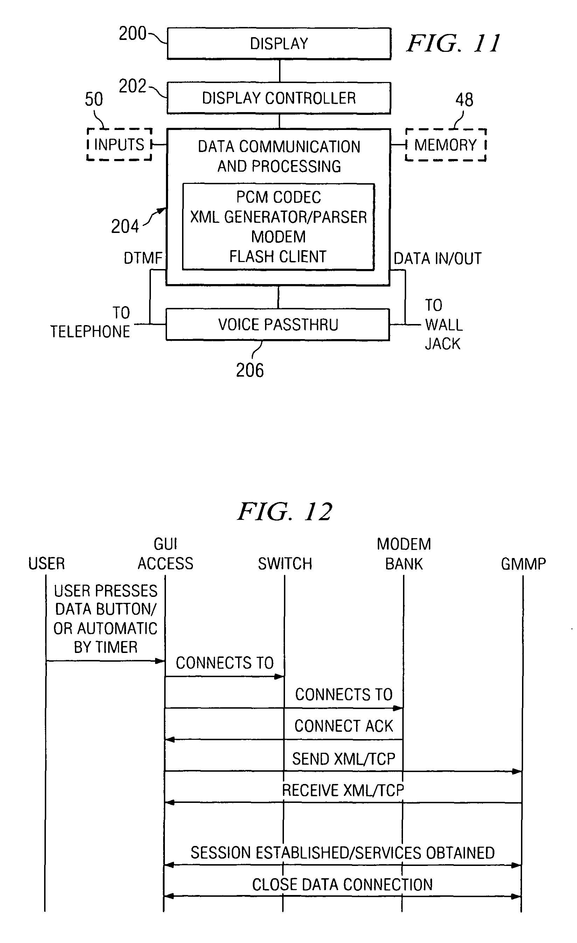

The graphic proxy 134 also provides enhanced telephone features to the black phone 12 using the GUI accessory 100 for an improved interface and information display. Figure 11 illustrates a block diagram of a circuit to implement the GUI accessory 11. A display 200, preferably a touchscreen, is coupled to display controller 202. Display controller 202 is coupled to data communications and processing circuitry 204, which may include some or all of the following: a general purpose processor, such as an ARM processor, a DSP and a V.90 modem chip or similar communications chip. The data communications and processing circuitry 204 is coupled to pass-through circuitry 206, memory 208 and, optionally, to input circuitry 50. The audio output of the black phone 12 is coupled to the communications and processing circuitry.

The GUI accessory 100 has a basic structure similar to that shown in Figure 5. The GUI accessory 100, however, will normally require more processing ability and a higher performance display and input (preferable using a touchscreen) to perform functions that require a higher bandwidth communication than the ACD accessory 10. In order to communicate with the graphical proxy server in a manner similar to that described above, the communications and processing circuitry 204 will need to perform XML generation and parsing, execute a FLASH or other GUI player, and perform modem functions. Typically, the modem functions could be performed in a DSP or in a discrete circuit. Additionally, if the GUI accessory 100 is to perform VOIP, the communications and processing circuitry 204 will need to digitize voice signals from the black phone 12, typically using a software or hardware CODEC (coder/decoder).

Referring to Figures 7 and 12, the GUI accessory 100 can connect to the graphical proxy 134 as follows. After initiating a data connection (which could be implemented, for example, by pressing a button or icon on the GUI accessory 100, or it could be initiated at preset times by the GUI accessory 100), the GUI accessory connects to the local switch 114, and subsequently to the modem bank 116 of the local switch 114. The modem bank 116 and GUI accessory perform a typical handshake to enable a suitable connection speed and protocol. Hence, a modem connection is created between the GUI accessory 100 and the modem bank 116, and a higher speed connection is created between the modem bank 116 and the graphical proxy 134.

Once the connection is established between the GUI accessory 100 and the graphical proxy 134 (specifically, the connection is made with the terminal manager 150), the graphical proxy 134 performs similar steps with regard to the GUI accessory 100 as it does with the graphical terminals 132. The terminal manager 150 instantiates a terminal controller 156 for the GUI accessory 100. The terminal manager 150 also registers the GUI accessory 100 with SIP proxy 119.

Upon start-up, the graphical proxy 134 may fetch information for the GUI accessory, such as the number of messages in the user's voice mailbox, messages in an email account, temperature and weather forecasts, and so on. Some information may be available to the graphical proxy 134 through a TCP/IP connection to Internet sites 113 and other information may be available from a server in a private network using TCP/IP, SIP, or another protocol, such as information on the user's PSTN services (112) or directory services (111). As described above in connection with the graphical terminals 132, information the graphical server 140 prepares the graphics and a URL address is sent to the GUI accessory along with associated text in an XML socket. As the user manipulates the interface on the GUI accessory 100, the XML commands are sent to the presentation manager 170, and actions are taken by the graphical proxy server 134 in response to the commands.

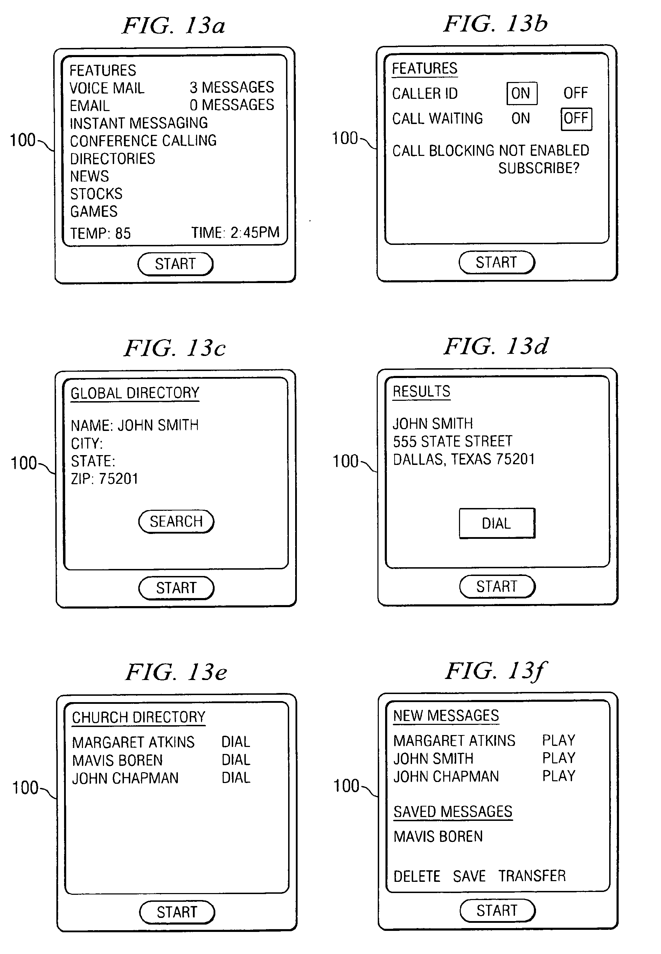

Figure 13a-f illustrates screens for various examples of features that could be controlled using the GUI accessory 100. For purposes of illustration, these screens are shown mainly as text, but it is expected that actual screens would make use of user manipulation of graphical objects for ease of operation.

Upon start up, the GUI accessory may show a main menu of the type shown in Figure 13a. This provides a number of categories from which the user may select, along with some of the information fetched automatically upon start up.

In Figure 13b, the user has selected the "features" category, which list current settings for telephony features to which the user subscribes and, optionally, to features available to the customer for subscription. In Figure 13b, the user is subscribed to Caller ID (which is currently turned on as shown by the box) and Call Waiting (which is currently turned off). The user can modify the settings simply by touching the screen.

In Figure 13c, the user has selected the "directories" category from the main menu and has requested a search of a global directory. In Figure 13d, the results of the search are shown, and the user can call the party by pressing the "dial" button. If the GUI accessory had VOIP capability, the VOIP connection could be setup using SIP (or another protocol); otherwise, the call could be completed through the local switch by dropping (or holding) the data connection and completing the PSTN call at the local switch.

Figure 13e illustrates a personalized directory, such as a church directory, that could be maintained in a database accessible to the graphical proxy server 134. Again, a VOIP or PSTN connection could be created simply by interacting with the display of the GUI accessory 100.

Figure 13f illustrates a screen from selecting the "voice mail" option. The screen shows new and saved messages, along with commands for manipulating the messages, such as "play", "save", "delete" and "transfer." The messages could be sent as a ".wav" file or similar data file.

In some cases, information could be downloaded during preset periods, without user interaction. For example, the GUI accessory 100 could create a data connection during each night to download information, such as retrieving offline messages (such as email headers), TV listings for the day, and programming updates. If necessary to make a call, the data connection can be broken or put on hold.

The features shown in Figures 12a-f are only a small portion of the number of features that could be implemented using the GUI accessory 100. Other features that could be supported include yellow page (business) searching and advertising, presence detection of others on network (on-hook and off-hook), off-line messaging (such as UUNET and UUCP), customer service/help, advertisements from service provider and local vendors, SPAM blocking, photograph caller ID (display picture of calling party), distributed gaming and video streaming. The GUI accessory can also be used for ACD routing, or other call center routing, as described above in connection with Figures 1 - 5.

This aspect of the present invention provides significant advantages over the prior art. With only a PSTN connection, a user can obtain ease of administration of telephony features and enhanced access to information using a graphical display.

The following features or combinations of features may also constitute advantageous embodiments of the claimed or described invention:
- The described or claimed device comprising input circuitry for receiving user commands;
- The described or claimed device wherein the processing circuitry downloads information at predetermined time periods;
- The described or claimed device wherein the information includes telephone number information;
- The described or claimed system wherein the graphic server can create a packetized voice connection responsive to a user input.

While the preferred embodiment of the invention has been discussed using specific languages and protocols, it would be known to one skilled in the art that alternative languages, application development tools, and protocols could be used in their place for a given implementation. For example, JAVA could be replaced in whole or part by C++ or similar programming environment and SIP could be replaced by H.323.

Although the Detailed Description of the invention has been directed to certain exemplary embodiments, various modifications of these embodiments, as well as alternative embodiments, will be suggested to those skilled in the art. The invention encompasses any modifications or alternative embodiments that fall within the scope of the Claims.

## Claims

1. A device used in connection with a public switched telephone network (PSTN) telephone comprising:
a display;
processing circuitry for:
creating a data connection over the PSTN with an automatic call distribution (ACD) system;
sending and receiving data to and from the ACD system; and
displaying information on the display responsive to received data.

2. The device of claim 1 wherein said display is a touchscreen display.

3. The device of claim 1 wherein said processing system includes modem circuitry for transmitting and receiving data at a fixed rate.

4. A device used in connection with a public switched telephone network (PSTN) telephone comprising:
a display;
processing circuitry for:
executing a graphical user interface;
creating a data connection over the PSTN with a data server for controlling operation of the graphical user interface; and
sending and receiving data to and from the data server for controlling operation of PSTN telephone features.

5. The device of claim 4 wherein said processing circuitry further downloads information for displaying on said display via the data server.

6. The device of claim 4 and further comprising voice passthru circuitry for selectively passing voice signals or data signals to the PSTN.

7. A system for providing enhanced features to a public switched telephone network (PSTN) telephone comprising:
telephone circuitry;
a device for providing a graphical user interface coupled to the telephone circuitry;
a graphic server for controlling the graphical user interface and providing data for the device; and
a switch for selectively providing a data connection to the graphic server and for providing a voice connection to the PSTN.

8. The system of claim 7 wherein said graphic server is coupled to databases for controlling PSTN telephone services.

9. The system of claim 7 wherein said graphic server can configure a voice connection through the switch responsive to a user input.

10. The system of claim 7 wherein said switch can hold the data connection during the voice connection.
